# FASCICULE DE BREVET EUROPEEN

(11) **EP 3 798 490 B1**
(45) Date de publication et mention de la délivrance du brevet: **23.02.2022**
(21) Numéro de dépôt: 20199031.4
(22) Date de dépôt: 29.09.2020
(51) Int. Cl.: F16L 29/04, F16L 37/30, F16L 37/32, F16L 37/34

(54) **RACCORD FLUIDIQUE**
FLUIDANSCHLUSSELEMENT
FLUID CONNECTOR

(30) Priorité: 30.09.2019 FR 1910792
(43) Date de publication de la demande: 31.03.2021
(73) Titulaire: Staubli Faverges, 74210 Faverges-Seythenex (FR)
(72) Inventeur: TIBERGHIEN, Alain-Christophe, 74230 SEVRIER (FR); DURIEUX, Christophe, 73200 GILLY SUR ISERE (FR); MARQUES BARROCA, Serafim, 73460 FRONTENEX (FR)
(74) Mandataire: Lavoix

(56) Documents cités:
- WO-A1-97/13095
- CN-U- 205 896 502
- GB-A- 2 068 069

## Description

La présente invention concerne un raccord fluidique.

Des raccords fluidiques de l'état de la technique sont connus de WO 97/13095 A1, GB 2 068 069 A et CN 205 896 502 U.

Pour le raccordement, notamment de circuits de refroidissement, il est connu d'utiliser des éléments de raccord mâle et femelle. Afin d'éviter toute fuite lors de la phase d'accouplement, il est connu, notamment de CN205896502U, d'utiliser un élément femelle muni de deux joints. Le premier joint assure l'étanchéité radiale entre un corps femelle, dans lequel est inséré le premier joint, et un tiroir, de sorte qu'aucun fluide ne peut fuir en configuration désaccouplée. Lors de la phase d'accouplement, une première étape consiste à insérer la partie mâle dans l'entrée de la partie femelle. Cette entrée est munie d'un deuxième joint, qui permet d'établir l'étanchéité entre la partie mâle et la partie femelle avant de créer un passage pour le fluide entre la partie mâle et la partie femelle. Cependant, lorsque la partie mâle est désaccouplée de la partie femelle, le deuxième joint est exposé et peut donc être altéré entre deux connexions.

C'est à cet inconvénient qu'entend remédier l'invention en proposant un raccord fluidique plus durable.

A cet effet, l'invention concerne un raccord fluidique comprenant un élément femelle et un élément mâle apte à s'insérer dans l'élément femelle. L'élément femelle comprend un corps principal définissant un canal interne principal, qui s'étend selon un axe central longitudinal, et comprenant un poussoir central fixe. L'élément femelle comprend également un tiroir, mobile longitudinalement dans le canal interne principal autour du poussoir entre une configuration de fermeture et une configuration d'ouverture du canal interne principal. L'élément mâle comprend un corps complémentaire définissant un canal interne complémentaire et une soupape mobile dans le canal interne complémentaire entre une position d'obturation du canal interne complémentaire, dans laquelle un premier joint assure l'étanchéité entre la soupape et le corps complémentaire, et une position écartée, dans laquelle la soupape n'obture plus le canal interne complémentaire. Dans une configuration désaccouplée du raccord fluidique, le tiroir est en configuration de fermeture et coopère radialement de manière étanche avec le corps principal par l'intermédiaire d'un deuxième joint logé dans une gorge interne du corps principal, tandis que la soupape est en position d'obturation. Dans une configuration accouplée du raccord fluidique, la soupape est repoussée en position écartée par le poussoir tandis que le corps complémentaire coopère avec le tiroir, qui est en configuration d'ouverture. Selon l'invention, le tiroir comprend un tiroir externe et un tiroir interne, mobiles l'un par rapport à l'autre. Le tiroir est tel que, en configuration de fermeture, le deuxième joint coopère avec le tiroir externe qui est dans une position avancée et le tiroir interne est dans une position avancée dans laquelle le tiroir interne est en contact étanche avec le tiroir externe et avec le poussoir. En configuration d'ouverture, le tiroir externe est dans une position reculée et le tiroir interne est dans une position décalée par rapport au tiroir externe, de sorte qu'un passage pour un fluide existe entre le tiroir externe et le tiroir interne. En outre, un premier ressort est interposé entre le tiroir interne et le corps principal pour repousser le tiroir interne vers sa position avancée, et l'élément femelle comprend au moins un organe de démultiplication. Le ou chaque organe de démultiplication est tel que, au cours d'une phase d'accouplement des éléments femelle et mâle pour passer le raccord fluidique de la configuration désaccouplée à la configuration accouplée, quelle que soit la position longitudinale du tiroir externe entre la position avancée et une position intermédiaire, dans laquelle le corps complémentaire coopère de manière étanche avec le deuxième joint, l'organe de démultiplication est désengagé d'au moins l'une parmi une surface de butée avant ménagée sur le corps principal, une surface de butée arrière ménagée sur le tiroir externe et une surface de butée avant ménagée sur le tiroir interne, le tiroir interne étant maintenu en contact étanche avec le tiroir externe et avec le poussoir. De la position intermédiaire à la position reculée du tiroir externe, l'organe de démultiplication est engagé avec la surface de butée avant du corps principal, avec la surface de butée arrière du tiroir externe et avec la surface de butée avant du tiroir interne, chaque organe de démultiplication déplaçant le tiroir interne vers sa position décalée par rapport au tiroir externe.

Grâce à l'invention, le contact entre le tiroir interne, le tiroir externe et le poussoir est maintenu étanche lors du passage de la position avancée à la position intermédiaire du tiroir externe. De plus, lors de cette phase, la mise en contact du corps complémentaire avec le deuxième joint permet d'assurer l'étanchéité entre l'élément mâle et l'élément femelle. Ainsi, l'étanchéité entre l'élément mâle et l'élément femelle est assurée avant le passage du tiroir en configuration d'ouverture et la création d'un passage pour le fluide. En outre, le deuxième joint n'est jamais exposé ou laissé à l'air libre. En effet, en configuration de fermeture, le deuxième joint est recouvert radialement par le tiroir. En phase d'accouplement et en configuration accouplée, le deuxième joint est protégé par le corps complémentaire. Ainsi, le deuxième joint est toujours protégé et ne risque pas d'être altéré entre deux connexions.

Selon des aspects avantageux mais non obligatoires de l'invention, un tel raccord fluidique peut incorporer une ou plusieurs des caractéristiques suivantes, prises selon toute combinaison techniquement admissible :
- De la position intermédiaire à la position reculée du tiroir externe, que le tiroir externe adopte en configuration accouplée du raccord fluidique :
   - le tiroir interne est déplacé vers l'arrière par rapport au tiroir externe,
   - une course de déplacement longitudinal du tiroir interne par rapport au corps principal est au moins 1,5 fois supérieure à une course de déplacement longitudinal du tiroir externe par rapport au corps principal.
- De la position avancée à la position intermédiaire du tiroir externe, chaque organe de démultiplication est désengagé de la surface de butée avant ménagée sur le corps principal et est mobile en translation longitudinale dans le corps principal.
- Un deuxième ressort est interposé entre le tiroir externe et le corps principal, repoussant le tiroir externe vers sa position avancée.
- L'effort élastique du deuxième ressort est supérieur à l'effort élastique du premier ressort.
- Chaque organe de démultiplication est un levier qui, de la position intermédiaire à la position reculée du tiroir externe, pivote dans le corps principal autour d'un axe situé dans un plan orthogonal à l'axe central longitudinal.
- Selon une direction radiale à l'axe central longitudinal, la surface de butée arrière du tiroir externe est disposée du même côté, par rapport à la surface de butée avant du corps principal, que la surface de butée avant du tiroir interne.
- Le levier comprend une tête externe et une tête interne, de préférence sphériques, disposées radialement de part et d'autre d'un corps intermédiaire de liaison, la tête externe étant engagée dans un logement interne du corps principal délimité longitudinalement par la surface de butée avant du corps principal et la tête interne étant engagée dans un logement du tiroir interne délimité longitudinalement par la surface de butée avant du tiroir interne, le corps intermédiaire étant apte à venir en contact contre la surface de butée arrière du tiroir externe.
- En configuration désaccouplée du raccord fluidique, le levier est incliné par rapport au plan orthogonal et la tête externe est en arrière de la tête interne, et en configuration accouplée du raccord fluidique, le levier est incliné par rapport au plan orthogonal et la tête externe est en avant de la tête interne.
- L'organe de démultiplication est apte à venir en butée, dans une direction radiale à l'axe central longitudinal, contre une surface de liaison ménagée sur le tiroir externe et, dans une direction radiale opposée, contre le corps principal.
- L'organe de démultiplication est monté, sans possibilité de mouvement longitudinal relatif, dans un logement du tiroir interne délimité longitudinalement par la surface de butée avant.
- En configuration désaccouplée du raccord fluidique, une face avant du poussoir, apte à venir en contact avec la soupape de l'élément mâle pour la repousser en position écartée, est décalée vers l'arrière par rapport à une face avant du tiroir externe d'une distance égale à une distance longitudinale parcourue par le tiroir externe par rapport au corps principal de sa position avancée à sa position intermédiaire.
- Un troisième joint à lèvre(s) réalise l'étanchéité entre le tiroir interne et le tiroir externe en configuration de fermeture du tiroir.
- Le premier joint et le troisième joint sont de géométrie identique.
- Le corps complémentaire est monté sur un support complémentaire avec possibilité de débattement relatif perpendiculairement à un axe longitudinal défini par le corps complémentaire.

L'invention sera mieux comprise et d'autres avantages de celle-ci apparaîtront plus clairement à la lumière de la description qui va suivre de deux modes de réalisation d'un raccord fluidique conforme à l'invention, donnée uniquement à titre d'exemple et faite en référence aux dessins, dans lesquels :
[Fig 1] la figure 1 est une coupe longitudinale d'un raccord conforme à un premier mode de réalisation de l'invention, dans une configuration désaccouplée ;
[Fig 2] la figure 2 est une vue en perspective éclatée d'une partie d'un élément femelle du raccord de la figure 1 ;
[Fig 3] la figure 3 est une vue similaire à la figure 1, illustrant une étape d'accouplement ;
[Fig 4] la figure 4 est une vue similaire à la figure 1, illustrant une étape d'accouplement subséquente à celle de la figure 3 ;
[Fig 5] la figure 5 est une coupe transversale du raccord de la figure 1, selon le plan V de la figure 4 ;
[Fig 6] la figure 6 est une vue similaire à la figure 1, illustrant une configuration accouplée ;
[Fig 7] la figure 7 est une coupe longitudinale d'un raccord conforme à un deuxième mode de réalisation de l'invention, dans une configuration désaccouplée ;
[Fig 8] la figure 8 est une coupe partielle selon le plan VIII de la figure 7 ;
[Fig 9] la figure 9 est une vue similaire à la figure 7, illustrant une phase d'accouplement ; et
[Fig 10] la figure 10 est une vue similaire à la figure 7, illustrant une configuration accouplée.

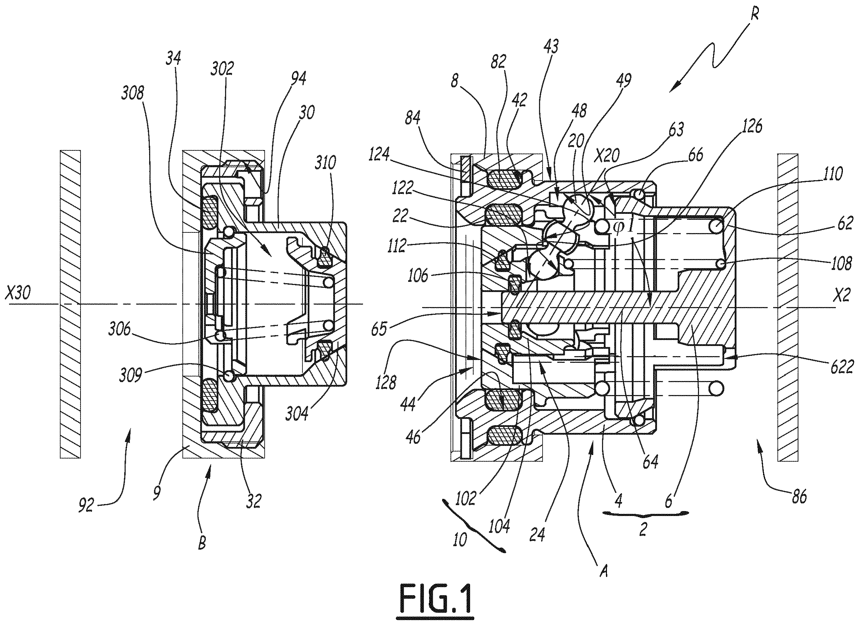

La figure 1 représente un raccord fluidique R comprenant un élément de raccord femelle A et un élément de raccord mâle B. Dans cette figure, le raccord fluidique R est dans une configuration désaccouplée, l'élément femelle A est donc éloigné de l'élément mâle B. Les éléments de raccord A et B sont configurés de sorte que l'élément mâle B puisse être inséré dans l'élément femelle A.

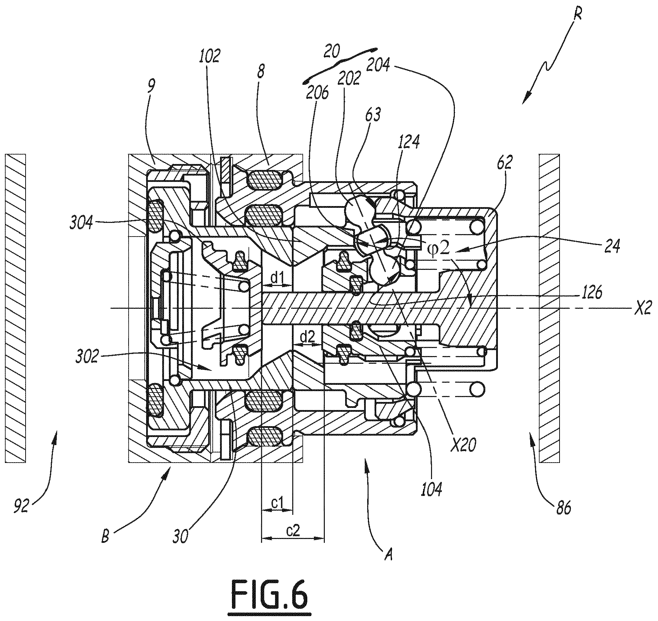

L'insertion de l'élément mâle B dans l'élément femelle A est effectuée au cours d'une phase d'accouplement. A l'issue de cette phase d'accouplement, le raccord fluidique R est dans une configuration accouplée, montrée à la figure 6.

L'élément femelle A comprend un corps principal 2, qui comprend un corps externe 4 et un corps poussoir 6. Le corps principal 2 est de révolution et définit un axe central longitudinal X2.

Dans la suite, lorsqu'il concerne l'élément femelle A, le terme « avant » fait référence à une direction longitudinale orientée du côté de l'élément mâle B au début de l'accouplement, soit vers la gauche sur la Figure 1, et le terme « arrière » fait référence à une direction longitudinale opposée. Lorsqu'il concerne l'élément mâle B, le terme « avant » fait référence à une direction longitudinale orientée du côté de l'élément femelle A au début de l'accouplement, soit vers la droite sur la Figure 1, et le terme « arrière » fait référence à une direction longitudinale opposée.

Les termes « longitudinal », « radial », « transversal » et « axial », « externe » et « interne » sont employés en référence à l'axe central longitudinal de l'élément de raccord concerné.

Dans la suite, le terme « joint » est utilisé pour définir des barrières d'étanchéité.

L'élément femelle A est monté sur un support 8 de manière étanche. L'étanchéité entre l'élément femelle A et le support 8 est, par exemple, effectuée par un joint torique 82, inséré dans une gorge périphérique externe 42, ménagée à cet effet sur une face extérieure 43 du corps extérieur 4.

L'élément femelle A est arrêté longitudinalement à l'arrière par rapport au support 8 par une butée ménagée dans le corps externe 4 et à l'avant par un segment d'arrêt 84. Le segment d'arrêt 84 est placé à l'avant du support 8 de sorte que l'avant de l'élément femelle A ne dépasse pas du support 8.

Le support 8 comprend un conduit 86, qui s'étend transversalement.

Le corps externe 4 délimite une embouchure 44 avec une surface évasée, ainsi qu'une gorge périphérique interne 46 accueillant un joint 22.

Le corps externe 4 délimite également trois logements internes 48 longitudinaux, dont la section, prise perpendiculairement à l'axe X2, présente un profil en arc de cercle.

Chaque logement interne 48 est délimité radialement par une surface de butée 49 ménagée sur le corps principal 2, en particulier sur le corps externe 4.

L'embouchure 44 est placée à l'avant du corps externe 4, la gorge périphérique interne 46 est placée en arrière de l'embouchure 44, selon l'axe X2, et les logements internes 48 sont placés en arrière de la gorge périphérique interne 46 et de l'embouchure 44.

Le corps poussoir 6 comprend une jupe 62 qui assure la solidarisation du corps poussoir 6 au corps externe 4 et qui délimite l'arrière de l'élément femelle A. Le corps poussoir comprend un poussoir 64, s'étendant longitudinalement à l'intérieur du corps externe 4 vers l'avant de l'élément femelle A. Une face avant 63 de la jupe 62 forme une surface de butée avant du corps principal 2 et délimite l'arrière des logements internes 48. La surface de butée avant 63 s'étend perpendiculairement à l'axe X2 et est orientée vers l'avant de l'élément femelle A. Le poussoir 64 forme une tige cylindrique centrale fixe de l'élément femelle A, de section circulaire et centrée sur l'axe X2.

Ensemble, le corps externe 4 et le corps poussoir 6 forment un canal interne principal 24, dans lequel le poussoir 64 est inséré, en s'étendant selon l'axe X2.

Le canal interne principal 24 communique avec le conduit 86 grâce à des évidements 622 de la jupe 62.

Les logements internes 48 sont ouverts sur le canal interne principal 24.

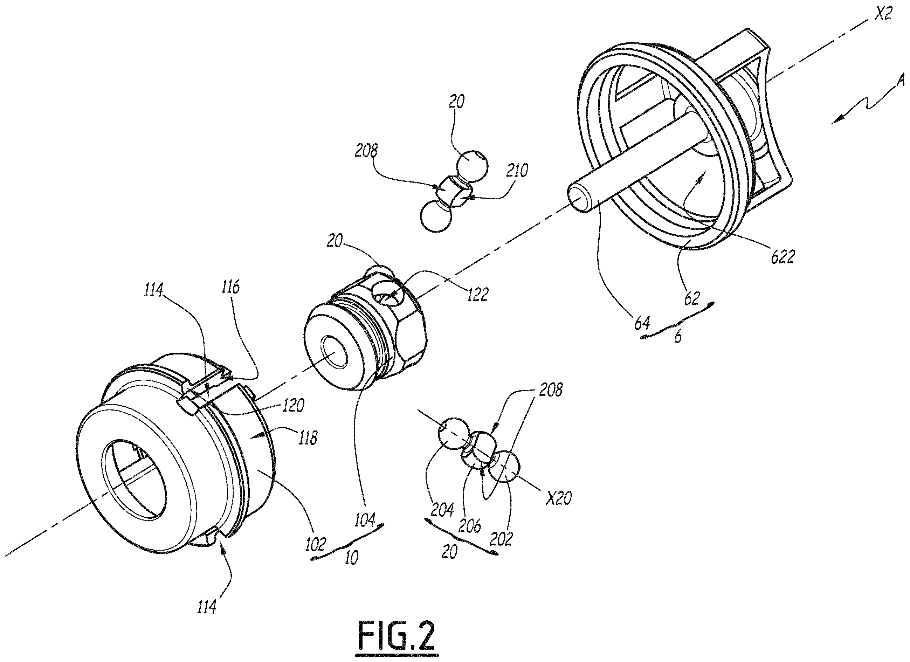

L'élément femelle A comprend également un tiroir 10 comprenant un tiroir externe 102 et un tiroir interne 104, aussi visibles à la figure 2 en vue éclatée, mobiles l'un par rapport à l'autre.

Le tiroir 10 est mobile longitudinalement dans le canal interne principal 24 autour du poussoir 64, entre une configuration de fermeture, montrée à la figure 1, lorsque le raccord fluidique R est en configuration désaccouplée, et une configuration d'ouverture, montrée à la figure 6, lorsque le raccord fluidique R est en configuration accouplée.

Le tiroir interne 104 est disposé coulissant autour du poussoir 64. Un joint à lèvre 106 assure l'étanchéité de la liaison entre le poussoir 64 et le tiroir interne 104 quelle que soit la position du tiroir interne 104 le long du poussoir 64. Le tiroir interne 104 est rappelé vers le tiroir externe 102 par un ressort 108 interposé entre le corps poussoir 6 et le tiroir interne 104.

Le tiroir externe 102 est disposé radialement entre le tiroir interne 104 et le corps externe 4. En configuration désaccouplée, comme sur la figure 1, le tiroir interne 104 est dans une position avancée et le tiroir externe 102 est repoussé vers l'avant du corps principal 2 dans une position avancée par un ressort 110 interposé entre le corps poussoir 6 et le tiroir externe 102. Le ressort 110 repousse le tiroir externe 102 vers sa position avancée et le corps poussoir 6 contre un circlip 66 logé dans une gorge interne du corps externe 4. Ainsi le corps poussoir 6 est fixe dans la direction longitudinale par rapport au corps externe 4.

Selon l'axe X2, l'effort élastique du ressort 110 est supérieur à l'effort élastique du ressort 108.

Ainsi, en configuration de fermeture, le tiroir interne 104 et le tiroir externe 102 coopèrent pour fermer le canal interne principal 24 à l'avant de l'élément femelle A. L'étanchéité entre le tiroir interne 104 et le tiroir externe 102 est réalisée par un joint à lèvre 112 qui vient en appui, selon l'axe longitudinal X2, sur un siège formé sur le tiroir externe 102. Ce joint s'accommode facilement de variations de position relative entre le tiroir externe 102 et le tiroir interne 104, au contraire d'un joint torique qu'il faudrait écraser pour assurer une étanchéité fiable entre les deux tiroirs 102 et 104.

Dans cette configuration, le joint 22 assure l'étanchéité radiale entre le corps principal 2 et le tiroir 10.

Le tiroir externe 102 comprend trois rainures longitudinales 114, borgnes à l'avant, débouchantes vers l'arrière et traversantes dans la direction radiale. Chaque rainure 114 comprend deux surfaces latérales 116 planes et parallèles à un plan radial formant un plan médian de la rainure. Chaque surface latérale 116 est reliée à une surface radiale externe 118 du tiroir externe par une surface de liaison 120 plane et inclinée par rapport à la surface latérale 116 d'un angle de 30°. Le fond de chaque rainure 114 s'étend perpendiculairement à l'axe X2 et forme une surface 124 de butée arrière du tiroir externe 102 qui est orientée vers l'arrière de l'élément femelle A.

En variante, chaque surface de liaison 120 est inclinée par rapport à la surface latérale 116 correspondante d'un angle différent de 30°, par exemple un angle entre 20° et 45°.

Le tiroir interne 104 comprend trois logements radiaux 122, de section circulaire, traversants, dont les surfaces internes forment des surfaces 126 de butée avant du tiroir interne 104 qui sont orientées vers l'avant de l'élément femelle A.

L'élément femelle A comprend également trois organes de démultiplication 20 de l'ouverture du canal interne principal 24 qui transforment le mouvement longitudinal du tiroir externe 102 dans le corps principal 2 en un mouvement longitudinal du tiroir interne 104 par rapport au tiroir externe 102.

Chaque organe de démultiplication 20 est un levier de forme allongée, qui s'étend en longueur suivant un axe X20. Chaque organe de démultiplication 20 comprend une tête sphérique externe 202, une tête sphérique interne 204 et un corps intermédiaire 206, reliant la tête sphérique externe 202 et la tête sphérique interne 204. Les diamètres respectifs de la tête sphérique externe 202 et de la tête sphérique interne 204 de chaque organe de démultiplication 20 sont identiques et correspondent, respectivement, à un jeu de fonctionnement près, aux géométries des logements internes 48 et des logements radiaux 122.

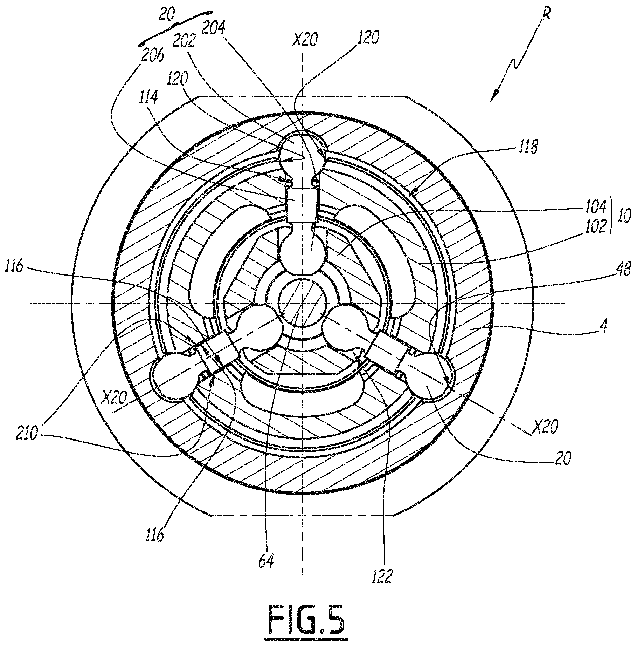

Comme visible à la figure 5, à l'état assemblé de l'élément femelle A, chaque tête sphérique externe 202 est maintenue radialement entre le corps externe 4 et le tiroir externe 102 en étant apte à coopérer avec la surface de liaison 120 correspondante dans une direction radiale à l'axe X2, tournée vers l'axe X2, et à coopérer avec la surface de butée 49 du logement interne 48 correspondant dans une direction radiale opposée. Ainsi, le mouvement de chaque organe de démultiplication 20 est limité par le tiroir externe 102 dans une direction radiale vers l'axe X2 et par le corps externe 4 dans une direction radiale opposée.

Les corps intermédiaires 206 des organes de démultiplication 20 sont, eux, logés dans les rainures longitudinales 114 du tiroir externe 102.

Chaque tête sphérique interne 204 est maintenue dans le tiroir interne 104 en étant logée dans le logement radial 122 correspondant par coopération de forme entre la tête sphérique interne 204 et le logement radial 122. En particulier, l'organe de démultiplication 20 est monté dans le logement 122 du tiroir interne 104 sans possibilité de mouvement longitudinal par rapport au tiroir interne 104, à un jeu de fonctionnement près. Longitudinalement vers l'arrière, la tête sphérique interne 204 est arrêtée par la surface 126 de butée avant du tiroir interne 104.

Chaque corps intermédiaire 206 comprend deux portions de surfaces sphériques 208. Ces deux portions sphériques 206 sont reliées par deux surfaces latérales 210 planes et parallèles entre elles.

Comme mieux visible à la figure 5, les axes X20 des organes de démultiplication 20 sont sécants avec l'axe X2 et s'étendent dans trois plans longitudinaux, non représentés sur les figures, répartis de manière régulière autour de l'axe X2. En configuration désaccouplée, l'axe X20 de chaque organe de démultiplication 20 est incliné par rapport à l'axe X2 d'un angle ϕ1 inférieur à 90°, l'angle ϕ1 étant pris du côté arrière de l'organe de démultiplication 20. Ainsi, la tête sphérique interne 204 de chaque organe de démultiplication 20 est plus en avant que la tête sphérique externe 202.

Dans cette configuration, chaque organe de démultiplication 20 est en appui contre la surface de butée arrière 124 du tiroir externe, par l'intermédiaire du corps intermédiaire 206, et contre la surface de butée avant 126 du logement radial 122 correspondant, par l'intermédiaire de la tête sphérique interne 204. La tête sphérique externe 202 est en regard, mais pas en contact, de la surface de butée avant 63 du corps principal 2.

En configuration désaccouplée, une face avant 65 du poussoir 64 est située en arrière d'une face avant 128 du tiroir externe 102. Longitudinalement, la face avant 65 du poussoir 64 est située au niveau de la gorge interne 46 du corps externe 4. En particulier, la face avant 65 s'étend dans un plan, non représenté sur les figures, qui est sécant à la gorge interne 46. Les faces avant des tiroirs externe et interne sont affleurantes.

L'élément mâle B comprend un corps complémentaire 30 tubulaire définissant un axe central longitudinal X30, ainsi qu'un couvercle 32.

L'élément mâle B est destiné à être monté sur un support complémentaire 9 qui forme avec le support 8 un ensemble de raccordement. Le support complémentaire 9 comprend un conduit complémentaire 92 transversal par rapport à l'axe X30. Pour ce faire, le support complémentaire 9 est muni d'un logement 94 débouchant à l'avant du support complémentaire 9, dans lequel est vissé le couvercle 32. L'étanchéité entre l'élément mâle B et le support complémentaire 9 est assurée par un joint 34.

Grâce au couvercle 32, l'élément mâle B est monté sur le support complémentaire 9 avec une possibilité de débattement relatif. Plus précisément, le couvercle 32 autorise un mouvement du corps complémentaire 30 par rapport au support complémentaire 9 dans toutes les directions perpendiculaires à l'axe X30, tout en conservant l'étanchéité entre le corps complémentaire 30 et le support complémentaire 9.

Le corps complémentaire 30 délimite un canal interne complémentaire 302 qui loge une soupape 304, repoussée dans une position avant d'obturation du canal interne complémentaire 302 par un ressort 306.

En position montée du corps complémentaire 30 dans le support complémentaire 9, le canal interne complémentaire 302 communique avec le conduit complémentaire 92.

La soupape 304 est mobile entre la position d'obturation, montrée à la figure 1, et une position arrière écartée, illustrée à la figure 6.

Le ressort 306 est en appui contre une pièce de butée 308 évidée, elle-même en butée arrière contre un circlip 309 maintenu dans le corps complémentaire 30.

En configuration désaccouplée, la soupape 304 est en position d'obturation et est en butée avant contre le corps complémentaire 30. Les surfaces avant du corps complémentaire 30 et de la soupape 304 sont affleurantes. L'étanchéité entre le corps complémentaire 30 et la soupape 304 dans cette configuration est assurée par un joint à lèvre 310.

Le joint 112 et le joint 310 sont de géométrie identique, c'est-à-dire qu'ils ont le même diamètre, et la même forme en configuration libre. Les gorges logeant ces joints 112 et 310 sont, elles aussi, de géométrie identique.

En variante, le joint 112 est de géométrie différente du joint 310. Les gorges logeant ces joints sont donc, elles aussi, de géométries différentes.

En variante, les joints 112 et 310 sont des joints adhérisés.

Dans la suite, le mouvement d'un seul organe de démultiplication 20 sera décrit, le mouvement des autres organes de démultiplication 20 étant le même.

Dans une première étape d'une phase d'accouplement non représentée sur les figures, les axes X2 et X30 sont parallèles et les supports 8 et 9 sont rapprochés parallèlement à l'axe X2. L'élément mâle B est guidé dans l'élément femelle A par le biais de l'embouchure 44. Ainsi, l'axe X30 est aligné avec l'axe X2 par déplacement du corps complémentaire 30 par rapport au support complémentaire 9, grâce à la possibilité de débattement du corps complémentaire 30 par rapport au support complémentaire 9, perpendiculairement aux axes X30 et X2. Ainsi, il n'est pas nécessaire d'avoir un alignement parfait entre les axes X30 et X2 préalablement à la première étape d'accouplement, pour pouvoir effectuer l'accouplement. Un défaut d'alignement entre les axes X2 et X30, compatible avec le débattement de l'élément mâle B par rapport au support complémentaire 9, par exemple de l'ordre de 0.25 mm, est toléré.

Dans cette première étape, la face avant du corps complémentaire 30 vient en contact avec la face avant 128 du tiroir externe 102 et la face avant 65 du poussoir 64 est à distance de la face avant de la soupape 304.

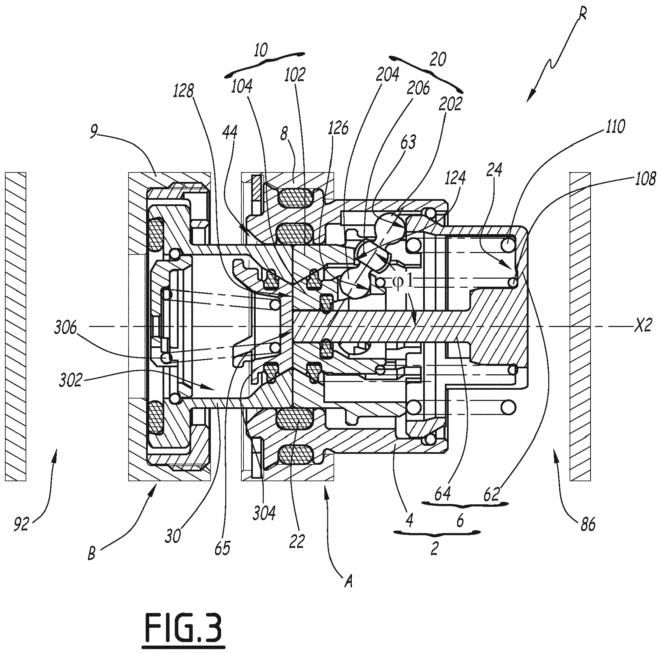

Dans une deuxième étape, qui conduit à la configuration de la figure 3, le rapprochement des supports 8 et 9 continue. Le corps complémentaire 30 repousse tout le tiroir 10. A cette étape, le tiroir interne 104 est toujours en contact étanche avec le tiroir externe 102.

Dans la configuration de la figure 3, le tiroir externe 102 est dans une position intermédiaire, dans laquelle le tiroir externe 102 et le corps complémentaire 30 coopèrent de manière étanche avec le joint 22, et le tiroir interne 104 est dans une position limite de contact avec le tiroir externe 102. Lorsque le tiroir externe 102 est reculé au-delà de sa position intermédiaire, le tiroir interne 104 perd le contact avec le tiroir externe 102, c'est-à-dire que le contact étanche n'est pas maintenu quand le tiroir externe 102 est poussé vers l'arrière au-delà de sa position intermédiaire.

Le canal interne principal 24 est donc toujours obturé par le tiroir 10. Le mouvement de recul du tiroir 10 repousse l'organe de démultiplication 20 qui reste cependant engagé avec la surface de butée arrière 124 du tiroir externe et avec la surface de butée avant 126 du logement radial 122 correspondantes. Lors de cette étape, l'organe de démultiplication 20 se déplace en translation longitudinale dans le corps principal 2 et la tête sphérique externe 202 de l'organe de démultiplication 20 se déplace dans son logement interne 48 correspondant, jusqu'à arriver en butée contre la surface de butée avant 63 du corps principal 2. Durant ce déplacement, la tête sphérique externe 202 de chaque organe de démultiplication 20 étant désengagée de la surface avant de butée 63 du corps principal 2, l'inclinaison ϕ1 de l'axe X20 de l'organe de démultiplication 20 par rapport à l'axe X2 est inchangée. Dans cette étape, l'organe de démultiplication 20 n'agit pas sur la position longitudinale relative du tiroir interne 104 et du tiroir externe 102.

En variante, dans cette étape, chaque organe de démultiplication 20 est désengagé de la surface de butée avant 126 du tiroir interne 104.

Ainsi quelle que soit la position longitudinale du tiroir externe 102 entre la position avancée et la position intermédiaire, l'organe de démultiplication 20 est désengagé d'au moins l'une parmi une surface de butée avant 63 ménagée sur le corps principal 2, une surface de butée arrière 124 ménagée sur le tiroir externe 102 et une surface de butée avant 126 ménagée sur le tiroir interne 104 et le tiroir interne 104 est maintenu en contact étanche avec le tiroir externe 102.

Par « désengagé d'une surface de butée » on entend que l'organe de démultiplication 20, en se déplaçant, n'exerce pas d'effort contre cette surface de butée. Au contraire, par « engagé avec une surface de butée » on entend que l'organe de démultiplication 20 est embrayé avec cette surface de butée et qu'en se déplaçant, l'organe de démultiplication 20 exerce un effort longitudinal contre cette surface de butée. En particulier, lorsque l'organe de démultiplication 20 est engagé avec une surface de butée, il est en contact longitudinal avec cette surface de butée.

Le tiroir 10 reculant dans le corps principal 2 vers une position intermédiaire, décalée d'une position avancée qui correspond à la position avancée des tiroirs externe 102 et interne 104, il libère partiellement le joint 22, avec lequel le corps complémentaire 30 peut alors coopérer. Ainsi, l'élément femelle A est en prise de manière étanche avec l'élément mâle B avant que le canal interne principal 24 soit relié au canal interne complémentaire 302.

La distance longitudinale entre la face avant 65 du poussoir 64 et la face avant 128 du tiroir externe 102 en configuration désaccouplée est égale à la distance longitudinale parcourue par le tiroir externe 102 par rapport au corps principal 2 de sa position avancée à sa position intermédiaire. A la fin de cette étape, la face avant de la soupape 304 est donc en contact avec la face avant 65 du poussoir.

Cette distance, aussi appelée « course morte » de l'organe de démultiplication 20, sans déplacement longitudinal relatif entre le tiroir externe 102 et le tiroir interne 104, permet d'assurer la prise d'étanchéité radiale entre le corps complémentaire 30 et le corps principal 2 avant l'ouverture des éléments femelle A et mâle B.

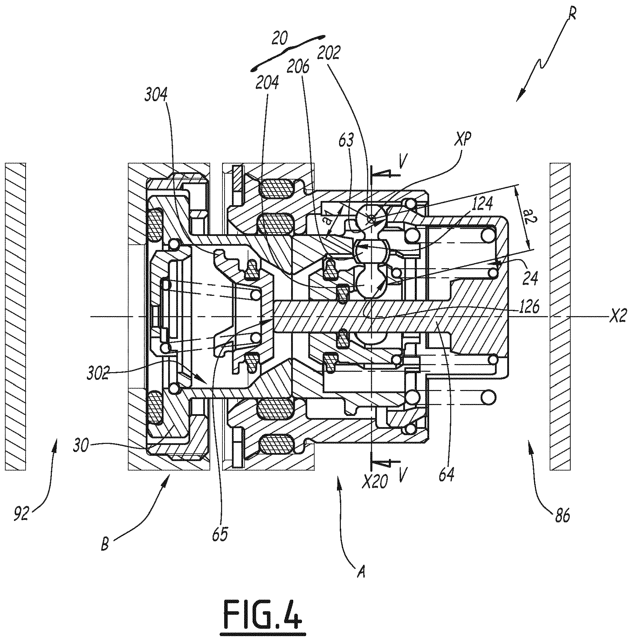

Dans une troisième étape, illustrée à la figure 4, l'accouplement se poursuit. Le tiroir externe 102 est repoussé vers l'arrière par le corps complémentaire 30 de la position intermédiaire à la position reculée pour atteindre la configuration d'ouverture du tiroir 10. En reculant, le tiroir externe 102 pousse, par l'intermédiaire de la surface de butée arrière 124 du tiroir externe 102, le corps intermédiaire 206 de l'organe de démultiplication 20 qui est engagé avec la surface de butée arrière 124. La tête sphérique externe 202 restant en contact et engagée avec la surface de butée avant 63 du corps principal 2, l'organe de démultiplication 20 effectue une rotation dans le corps principal 2 autour d'un axe de pivotement XP passant par le centre de la tête sphérique externe 202 et orthoradial à l'axe X2. L'axe de pivotement XP est situé dans un plan orthogonal à l'axe X2. L'axe de pivotement XP est disposé au-delà du tiroir 10 dans une direction radiale externe à l'axe X2. La tête sphérique interne 204 étant en contact et engagée avec la surface de butée avant 126 du tiroir interne 104, le tiroir interne 104 est entraîné par l'organe de démultiplication 20 vers l'arrière du corps principal 2.

On définit une distance a1 comme étant la distance entre l'axe de pivotement XP de l'organe de démultiplication 20, c'est-à-dire le centre de la tête sphérique externe 202, et le point de contact entre le corps intermédiaire 206 et la surface de butée arrière 124 du tiroir externe 102. On définit une distance a2 comme étant la distance entre l'axe de pivotement de l'organe de démultiplication 20 et le point de contact entre la tête sphérique interne 204 et la surface de butée avant 126 du tiroir interne 104. Les distances a1 et a2 sont prises en projection dans un plan perpendiculaire au plan de la figure 5 et parallèle à l'axe X20 de l'organe de démultiplication 20 considéré. La distance a2 étant supérieure à la distance a1, il y a démultiplication entre le mouvement du tiroir externe 102 et le mouvement du tiroir interne 104. Dans l'exemple des figures, une course c2 de déplacement longitudinal, par rapport au corps principal 2, du tiroir interne 104 entre sa position limite de contact avec le tiroir externe 102 et une position décalée du tiroir externe 102, que le tiroir externe adopte lorsque l'élément femelle A est en configuration accouplée avec l'élément mâle B, est au moins 1,5 fois, de préférence au moins 2 fois supérieure, à une course c1 de déplacement longitudinal, par rapport au corps principal 2, du tiroir externe 102 entre sa position intermédiaire et sa position reculée en configuration accouplée.

Le tiroir 10 est repoussé en configuration d'ouverture par le corps complémentaire 30 qui coopère avec le tiroir externe 102 du tiroir 10. La face avant du tiroir interne 104 se trouve donc décalée de la face avant du tiroir externe 102 et le tiroir interne 102 est dans sa position décalée par rapport au tiroir externe 104, ce qui crée un passage pour un fluide depuis ou vers le canal interne principal 24 entre le tiroir interne 104 et le tiroir externe 102. L'organe de démultiplication 20 démultiplie le mouvement du tiroir externe 102 en mouvement du tiroir interne 104, ce qui permet de dégager un maximum de passage entre le tiroir interne 104 et le tiroir externe 102 avec un minimum de course du tiroir externe 102. Cela permet de minimiser l'encombrement du raccord fluidique R.

En parallèle du mouvement du tiroir 10, le poussoir 64 repousse la soupape 304 en arrière dans le canal interne complémentaire 302, ce qui rompt l'étanchéité entre la soupape 304 et le corps complémentaire 30. Le fluide peut donc passer de l'un à l'autre des éléments de raccord A et B, tout en garantissant l'étanchéité entre l'élément femelle A et l'élément mâle B, ainsi qu'entre le tiroir interne 104 et le poussoir 64.

Le pivotement de l'organe de démultiplication 20 a lieu jusqu'à ce que les supports 8 et 9 atteignent une position relative donnée le long de l'axe X2. Par exemple, comme sur la figure 6, le pivotement a lieu jusqu'à ce que les supports 8 et 9 entrent en contact.

Dans cette configuration, qui est la configuration accouplée du raccord fluidique R, la tête sphérique externe 202 est en contact avec la surface de butée avant 63 du corps principal 2, le corps intermédiaire 206 est en contact avec la surface de butée arrière 124 du tiroir externe 102 et la tête sphérique interne 204 est en contact avec la surface de butée avant 126 du tiroir interne 104.

La soupape 304 est dans une position écartée, dans laquelle le joint 310 n'assure plus l'étanchéité entre la soupape 304 et le corps complémentaire 30 et la soupape 304 n'obture plus le canal interne complémentaire 302. Le tiroir interne 104 est dans sa position décalée. L'axe X20 de l'organe de démultiplication 20 est incliné par rapport à l'axe X20 d'un angle ϕ2 supérieur à 90°, l'angle ϕ2 étant pris du côté arrière de l'organe de démultiplication 20. Ainsi la tête sphérique externe 202 est plus en avant que la tête sphérique interne 204. En particulier l'angle supplémentaire de l'angle ϕ2 et l'angle ϕ1 ont même valeur.

Ainsi, le fluide peut librement circuler entre les conduits 86 et 92 en passant par le canal interne principal 24, entre le tiroir interne 104 et le tiroir externe 102, au niveau du siège formé sur le tiroir externe 102 pour le joint 112, et dans le canal interne complémentaire 302 en passant par l'espace entre la soupape 304 et le corps complémentaire 30.

Dans ce mode de réalisation, une distance longitudinale d1, parcourue par la soupape 304 par rapport au corps complémentaire 30 entre la position d'obturation et la position écartée de la soupape 304 est égale à une distance longitudinale d2 de décalage du tiroir interne 104 par rapport au tiroir externe 102.

Selon la direction radiale, la surface de butée arrière 124 du tiroir externe 102 est disposée du même côté que la surface de butée avant 126 du tiroir interne 104 par rapport à la surface de butée avant 63 du corps principal 2. Le mouvement du tiroir interne 104 et le mouvement du tiroir externe 102, lors du passage de la position intermédiaire à la position reculée du tiroir externe 102, se font donc dans la même direction longitudinale, vers l'arrière. Comme la surface de butée avant 126 du tiroir interne 104 et la surface de butée avant 63 du corps principal 2 sont disposées de part et d'autre de la surface de butée arrière 124 du tiroir externe 102 selon la direction radiale, la position décalée du tiroir interne 104 est une position décalée vers l'arrière par rapport au tiroir externe 102. Pour que le tiroir interne 104 adopte une position décalée par rapport au tiroir externe 102, l'organe de démultiplication 20 est configuré pour déplacer le tiroir interne 104 de sa position intermédiaire à sa position décalée sur la course c1 longitudinale, qui est différente de la course c2 longitudinale du tiroir externe 102 entre sa position intermédiaire et sa position reculée. En particulier, la course c2 est plus grande que la course c1 du tiroir externe 102 entre sa position intermédiaire et sa position reculée. La configuration de l'organe de démultiplication 20 dans les tiroirs interne 102 et externe 104 permet un mouvement du tiroir interne 104 démultiplié par rapport au mouvement du tiroir externe 102 entre sa position intermédiaire et sa position reculée.

Pour le désaccouplement, la séquence inverse à celle décrite ci-dessus se produit. L'élément femelle A est éloigné longitudinalement de l'élément mâle B. Ainsi, la soupape 304 est repoussée en position d'obturation par le ressort 306, le tiroir externe 102 suit le mouvement de retrait du corps complémentaire 30 et est repoussé en position avancée par le ressort 110 et le tiroir interne 104 est repoussé en position avancée, contre le tiroir externe 102, par le ressort 108. Les organes de démultiplication 20 pivotent dans le corps principal 2 jusqu'à ce que le tiroir interne 104 parvienne en contact étanche avec le tiroir externe 102. Le tiroir externe 102 coopère alors de manière étanche avec le joint 22.

La géométrie des organes de démultiplication 20 et leur agencement dans l'élément femelle A permet une construction compacte du raccord fluidique R. La cinématique de la construction avec les organes de démultiplication 20 mobiles longitudinalement est simple et la course morte des organes de démultiplication 20 est peu dépendante des tolérances et des positionnements relatifs des différentes parties du raccord fluidique R.

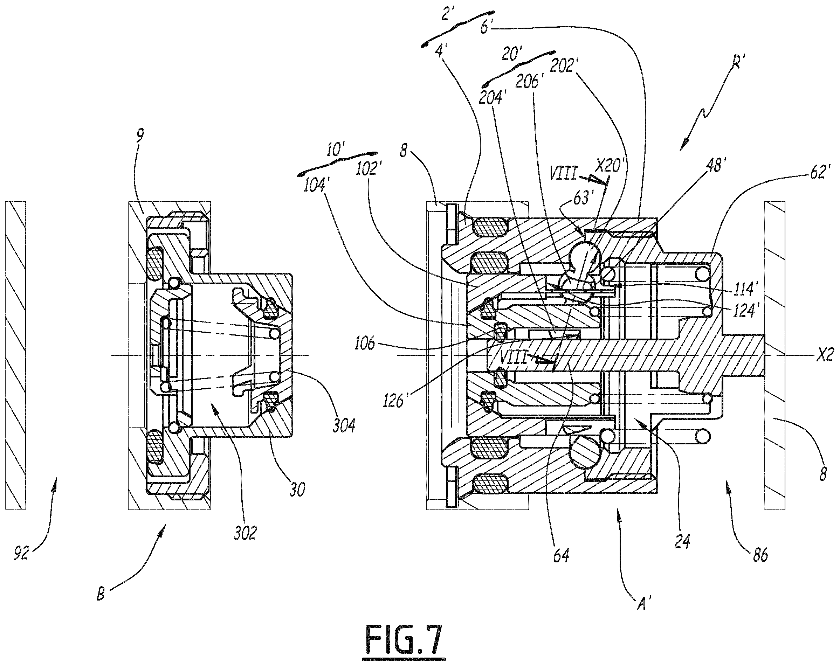

Un deuxième mode de réalisation du raccord fluidique, référencé R', est illustré sur les figures 7 à 10.

Dans ce qui suit, on décrit principalement les différences entre le premier mode et le deuxième mode de réalisation. Les composants qui, structurellement, restent identiques au premier mode de réalisation, seront désignés par les mêmes références que ci-dessus et ne seront pas décrits en détail. Les composants structurellement différents auront la même référence suivie d'un prime.

Dans ce mode de réalisation du raccord fluidique R', l'élément mâle B est identique à celui du premier mode de réalisation, ses composants seront donc, dans la suite, désignés par les mêmes références que dans le premier mode de réalisation.

La figure 7 montre le raccord fluidique R' en configuration désaccouplée.

L'élément femelle A' comprend un corps principal 2', comprenant un corps externe 4' et un corps poussoir 6'. Le corps poussoir 6' comprend le poussoir 64 et une jupe 62'. Le corps principal 2' définit le canal interne principal 24 et comprend un tiroir 10'. Le tiroir 10' comprend un tiroir externe 102' et un tiroir interne 104' disposé radialement entre le tiroir externe 102' et le poussoir 64. Comme dans le premier mode de réalisation, en configuration de fermeture, le tiroir interne 104' est en position avancée en contact étanche avec le tiroir externe 102' par le biais du joint 106.

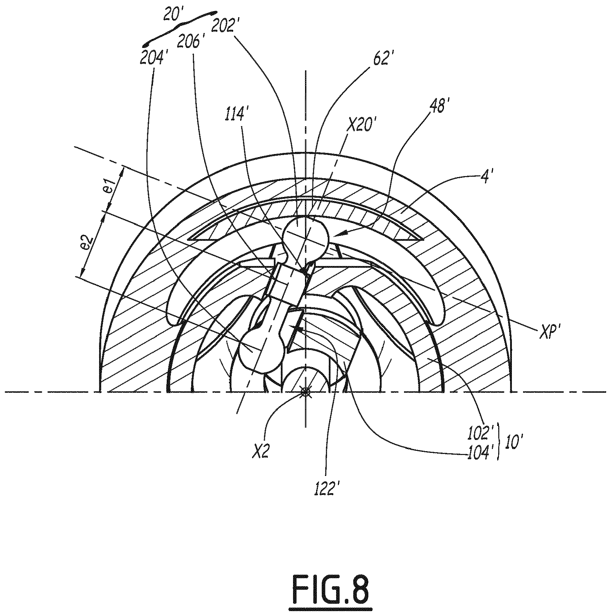

Comme mieux visible à la figure 8, l'élément femelle A' comprend trois organes de démultiplication 20', qui sont asymétriques. Une distance e1 entre le centre d'une tête sphérique externe 202' et le centre d'un corps intermédiaire 206' de chaque organe de démultiplication 20' est inférieure à une distance e2 entre le centre d'une tête sphérique interne 204' et le centre du corps intermédiaire 206' de chaque organe de démultiplication 20', le corps intermédiaire 206' reliant la tête sphérique externe 202' et la tête sphérique interne 204'. Par exemple, la distance e2 est de l'ordre de 1,4 fois la distance e1, de préférence au moins 1,25 fois la distance e1.

Dans la suite, le montage et le fonctionnement d'un seul organe de démultiplication 20' sera décrit, le montage et le fonctionnement des autres organes de démultiplication 20' étant identique.

La tête sphérique externe 202' prend place dans un logement interne 48' délimité à l'avant par le corps externe 4' et configuré pour que la tête sphérique externe 202' soit en permanence en butée à l'avant contre le corps externe 4' et à l'arrière contre une surface de butée avant 63' formée par la jupe 62', à un jeu de fonctionnement près. L'organe de démultiplication 20' est donc en permanence engagé avec la surface de butée avant 63' du corps externe 4.

En pratique, le logement interne 48' a une section, prise dans un plan longitudinal, comme à la figure 7, en forme de portion de cercle, cette portion représentant plus d'un demi-cercle. Le centre de cette section est confondu avec le centre de la tête sphérique externe 202' par lequel passe l'axe de pivotement, noté XP' sur la figure 8, de l'organe de démultiplication 20'.

Il est à noter que, dans ce mode de réalisation, un axe X20' de l'organe de démultiplication 20' n'est pas sécant avec l'axe longitudinal X2, contrairement au premier mode de réalisation. L'axe de pivotement XP' n'est pas orthoradial à l'axe X2, mais il est situé dans un plan orthogonal à l'axe X20'. L'axe de pivotement XP' est disposé au-delà du tiroir 10' dans une direction radiale externe à l'axe X2.

Le corps intermédiaire 206' de l'organe de démultiplication 20' est logé dans une rainure longitudinale 114' du tiroir externe 102' et la tête sphérique interne 204' est logée dans un logement 122' allongé, ménagé dans le tiroir interne 104'. Comme visible à la figure 8, la rainure longitudinale 114' et le logement 122' sont alignés le long de l'axe X20'.

En configuration désaccouplée, l'organe de démultiplication 20' est engagé avec une surface de butée avant 126' du tiroir interne 104', avec la surface de butée avant 63' du corps principal 2' mais désengagé de la surface de butée arrière 124' du tiroir externe 102' en étant longitudinalement en regard mais à distance de cette surface de butée arrière 124'.

Lors de la phase d'accouplement, l'élément mâle B est guidé dans l'élément femelle A' par l'embouchure 44 afin d'aligner l'axe X2 du corps principal 2' avec l'axe X30 du corps complémentaire 30.

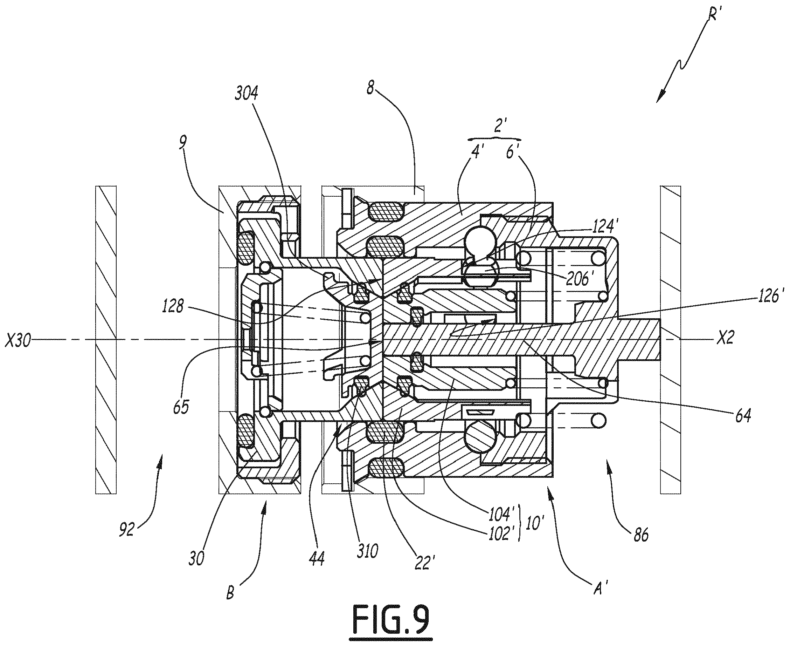

Dans une étape illustrée à la figure 9, le tiroir 10' est repoussé par le corps complémentaire 30 Le tiroir externe 102' est entraîné vers une position intermédiaire dans laquelle le tiroir interne 104', est toujours en contact étanche avec le tiroir externe 102'. Dans cette position, la face avant 65 du poussoir 64 est toujours alignée avec la face avant 128 du tiroir externe 102'. Le corps complémentaire 30 est en contact avec le joint 22, ce qui permet d'assurer l'étanchéité entre l'élément femelle A' et l'élément mâle B avant l'ouverture de ceux-ci. Dans cette étape, la soupape 304 est en position d'obturation, c'est-à-dire qu'elle est dans une position telle que le joint 310 assure l'étanchéité entre la soupape 304 et le corps complémentaire 30.

Lors du passage d'une position avancée, comme à la figure 7, à la position intermédiaire, comme à la figure 9, du tiroir externe 102', le logement 122' se déplace tout d'abord longitudinalement dans le corps principal 2' avec le tiroir externe 102' alors que la tête sphérique interne 204' reste immobile. La tête sphérique interne 204' est désengagée de la surface de butée avant 126'. Puis l'organe de démultiplication 20' s'engage avec la surface de butée arrière 124' du tiroir externe 102' qui entre en contact avant avec le corps intermédiaire 206' de l'organe de démultiplication 20'. Le mouvement de recul du tiroir externe 102' fait pivoter l'organe de démultiplication 20' autour de son axe de pivotement XP' en direction de la surface de butée avant 126' du tiroir interne 104'. Lorsque la tête sphérique interne 204' parvient en butée arrière contre la surface de butée avant 126', tel qu'illustré à la figure 9, l'organe de démultiplication 20' est de nouveau engagé avec la surface de butée avant 126'. Le tiroir externe 102' est en position intermédiaire, dans laquelle le corps complémentaire 30 est en contact étanche avec le corps principal 2' via le joint 22'. Le tiroir interne 104' est dans sa position limite de contact avec le tiroir externe 102'. Ainsi, dans certaines positions longitudinales du tiroir externe 102' de la position avancée à la position intermédiaire du tiroir externe 102', l'organe de démultiplication 20' est désengagé à la fois de la surface de butée arrière 124' du tiroir externe 102' et de la surface de butée avant 126' du tiroir interne 104', tandis que dans les autres positions longitudinales du tiroir externe 102' de la position avancée à la position intermédiaire du tiroir externe 102', l'organe de démultiplication 20' est désengagé seulement de la surface de butée avant 126' du tiroir interne 104'. Quelle que soit la position longitudinale du tiroir externe 102' entre la position avancée et la position intermédiaire, l'organe de démultiplication 20' est désengagé d'au moins l'une parmi une surface de butée avant 63' ménagée sur le corps principal 2', une surface de butée arrière 124' ménagée sur le tiroir externe 102' et une surface de butée avant 126' ménagée sur le tiroir interne 104' et le tiroir interne 104' est maintenu en contact étanche avec le tiroir externe 102'.

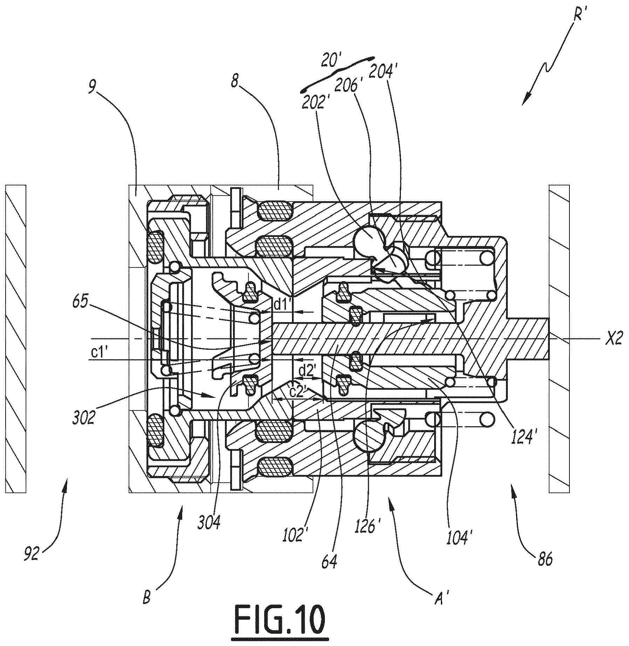

Ensuite, dans une étape qui conduit à la configuration de la figure 10, le corps complémentaire 30 est inséré dans l'élément femelle A' selon une direction arrière définie par l'élément femelle A' jusqu'à ce que les supports 8 et 9 soient en contact. Le corps intermédiaire 206' est toujours en contact avec la surface de butée arrière 124' du tiroir externe 102' et la tête sphérique interne 204' est en contact avec la surface de butée avant 126' du tiroir interne 104'. Le corps intermédiaire 206' étant repoussé par le tiroir externe 102', l'organe de démultiplication 20' pivote autour de son axe de pivotement XP'. Ainsi, le corps complémentaire 206' se retrouve en arrière de la tête sphérique externe 202' et la tête sphérique interne 204' se retrouve en arrière du corps intermédiaire 206', et donc de la tête sphérique externe 202'.

Ainsi, étant donné la configuration des points de contact entre l'organe de démultiplication 20' et le tiroir interne 102', respectivement le tiroir externe 104', par rapport à l'axe de pivotement XP', le tiroir interne 104' est repoussé dans sa position arrière décalée, où il est séparé du tiroir externe 102', laissant un passage pour le fluide entre le tiroir interne 104' et le tiroir externe 102'. Etant donné l'asymétrie de l'organe de démultiplication 20', une course c2' de déplacement longitudinal, par rapport au corps principal 2', du tiroir interne 104' entre sa position limite de contact avec le tiroir externe 102' et une position décalée, lorsque l'élément femelle A est en configuration accouplée avec l'élément mâle B, est au moins 2,5 fois supérieure à une course c1' de déplacement longitudinal, par rapport au corps principal 2', du tiroir externe 102' entre sa position intermédiaire et sa position reculée en configuration accouplée.

De la même manière que dans le premier mode de réalisation, en parallèle, la face avant 65 du poussoir 64 rentre en contact avec la soupape 304 pour la repousser vers sa position écartée, afin de laisser passer le fluide entre le canal interne complémentaire 302 et le canal interne principal 24.

L'inclinaison de l'axe de pivotement XP' et l'asymétrie de l'organe de démultiplication 20' permettent d'avoir un distance longitudinale d1' parcourue par la soupape 304 par rapport au corps complémentaire 30 entre sa position d'obturation et sa position écartée en configuration accouplée plus faible qu'une distance longitudinale d2' de décalage du tiroir interne 104' par rapport au tiroir externe 102' parcourue par le tiroir interne 104' entre sa position intermédiaire et sa position décalée en configuration accouplée.

Les joints à lèvre mentionnés ci-dessus peuvent comprendre une ou plusieurs lèvres.

Les variantes mentionnées ci-dessous concernent les deux modes de réalisation décrits ci-dessus.

En variante, l'élément femelle A ou A' comprend un nombre différent d'organes de démultiplication 20 ou 20', par exemple un, deux, quatre ou six. Dans ce cas, l'élément femelle A ou A' comprend un nombre correspondant de logements internes 48 ou 48', de rainures longitudinales 114 ou 114' et de logements 122 ou 122'.

En variante, les diamètres respectifs de la tête sphérique externe 202 ou 202' et de la tête sphérique interne 204 ou 204' de chaque organe de démultiplication sont différents.

Selon une autre variante, la tête externe 202 ou 202' de chaque organe de démultiplication 20 ou 20' n'est pas sphérique. Par exemple, elle est cylindrique.

En variante, l'étanchéité entre le tiroir interne 104 ou 104' et le tiroir externe 102 ou 102' en configuration de fermeture est une étanchéité radiale. En d'autres termes, en configuration de fermeture du tiroir 10 ou 10', un joint est interposé entre une surface radiale externe du tiroir interne 104 ou 104' et une surface radiale interne du tiroir externe 102 ou 102' et le tiroir interne 104 ou 104' n'est pas en butée longitudinale contre le tiroir externe 102 ou 102' par l'intermédiaire du joint.

En variante, le tiroir externe 102 ou 102' ne présente pas de rainure longitudinale 114 ou 114' et la surface de butée arrière 124 ou 124' du tiroir externe 102 ou 102' est ménagée au niveau d'une face arrière du tiroir externe 102 ou 102'.

En variante, chaque organe de démultiplication 20 peut être un levier à deux branches, l'une s'étendant à partir d'une tête externe d'un côté de l'axe longitudinal X2 pour coopérer avec le tiroir externe 102 et l'autre s'étendant à partir de la tête externe au-delà de l'axe X2 pour coopérer avec le tiroir interne 104. Dans ce cas, l'axe de pivotement de chaque organe de démultiplication 20 est disposé au-delà des tiroirs interne 104 et externe 102 dans une direction radiale externe à l'axe central X2.

En variante, la position relative donnée entre les supports 8 et 9 atteinte lors de la troisième étape de la phase d'accouplement peut être définie comme une distance non nulle entre les supports 8 et 9, par exemple 2 mm.

## Revendications

1. Raccord fluidique (R ; R') comprenant un élément femelle (A ; A') et un élément mâle (B) apte à s'insérer dans l'élément femelle, l'élément femelle comprenant :
- un corps principal (2 ; 2'), définissant un canal interne principal (24), qui s'étend selon un axe central longitudinal (X2), et comprenant un poussoir (64) central fixe ; et
- un tiroir (10 ; 10'), mobile longitudinalement dans le canal interne principal autour du poussoir entre une configuration de fermeture et une configuration d'ouverture du canal interne principal,
et l'élément mâle comprenant :
- un corps complémentaire (30) définissant un canal interne complémentaire (302) ; et
- une soupape (304) mobile dans le canal interne complémentaire entre une position d'obturation du canal interne complémentaire, dans laquelle un premier joint (310) assure l'étanchéité entre la soupape et le corps complémentaire, et une position écartée, dans laquelle la soupape n'obture plus le canal interne complémentaire,
dans lequel,
- dans une configuration désaccouplée du raccord fluidique (R ; R'), le tiroir (10 ; 10') est en configuration de fermeture et coopère radialement de manière étanche avec le corps principal (2 ; 2') par l'intermédiaire d'un deuxième joint (22 ; 22') logé dans une gorge interne (46) du corps principal, tandis que la soupape est en position d'obturation,
- dans une configuration accouplée du raccord fluidique, la soupape est repoussée en position écartée par le poussoir (64) tandis que le corps complémentaire (30) coopère avec le tiroir, qui est en configuration d'ouverture,
**caractérisé en ce que** le tiroir (10 ; 10') comprend un tiroir externe (102 ; 102') et un tiroir interne (104 ; 104'), mobiles l'un par rapport à l'autre, le tiroir étant tel que :
- en configuration de fermeture, le deuxième joint (22 ; 22') coopère avec le tiroir externe (102 ; 102') qui est dans une position avancée et le tiroir interne (104 ; 104') est dans une position avancée dans laquelle le tiroir interne est en contact étanche avec le tiroir externe et avec le poussoir ; et
- en configuration d'ouverture, le tiroir externe est dans une position reculée et le tiroir interne est dans une position décalée par rapport au tiroir externe, de sorte qu'un passage pour un fluide existe entre le tiroir externe et le tiroir interne,
**en ce qu'**un premier ressort (108) est interposé entre le tiroir interne et le corps principal (2 ; 2') pour repousser le tiroir interne vers sa position avancée, et **en ce que** l'élément femelle (A ; A') comprend au moins un organe de démultiplication (20 ; 20'), le ou chaque organe de démultiplication étant tel que, au cours d'une phase d'accouplement des éléments femelle (A ; A') et mâle (B) pour passer le raccord fluidique (R ; R') de la configuration désaccouplée à la configuration accouplée :
- quelle que soit la position longitudinale du tiroir externe entre la position avancée et une position intermédiaire, dans laquelle le corps complémentaire (30) coopère de manière étanche avec le deuxième joint (22 ; 22'), l'organe de démultiplication (20 ; 20') est désengagé d'au moins l'une parmi une surface de butée avant (63 ; 63') ménagée sur le corps principal, une surface de butée arrière (124 ; 124') ménagée sur le tiroir externe et une surface de butée avant (126 ; 126') ménagée sur le tiroir interne, le tiroir interne étant maintenu en contact étanche avec le tiroir externe et avec le poussoir, et
- de la position intermédiaire à la position reculée du tiroir externe, l'organe de démultiplication est engagé avec la surface de butée avant du corps principal, avec la surface de butée arrière du tiroir externe et avec la surface de butée avant du tiroir interne, chaque organe de démultiplication déplaçant le tiroir interne vers sa position décalée par rapport au tiroir externe.

2. Raccord fluidique (R ; R') selon la revendication 1, **caractérisé en ce que**, de la position intermédiaire à la position reculée du tiroir externe (102 ; 102'), que le tiroir externe adopte en configuration accouplée du raccord fluidique :
- le tiroir interne (104 ; 104') est déplacé vers l'arrière par rapport au tiroir externe,
- une course (c2 ; c2') de déplacement longitudinal du tiroir interne (104 ; 104') par rapport au corps principal (2 ; 2') est au moins 1,5 fois supérieure à une course (c1 ; c1') de déplacement longitudinal du tiroir externe (102 ; 102') par rapport au corps principal (2 ; 2').

3. Raccord fluidique (R) selon l'une quelconque des revendications précédentes, **caractérisé en ce que**, de la position avancée à la position intermédiaire du tiroir externe (104), chaque organe de démultiplication (20) est désengagé de la surface de butée avant (63) ménagée sur le corps principal (2) et est mobile en translation longitudinale dans le corps principal.

4. Raccord fluidique (R ; R') selon l'une quelconque des revendications précédentes, **caractérisé en ce qu'**un deuxième ressort (110) est interposé entre le tiroir externe (102 ; 102') et le corps principal (2 ; 2'), repoussant le tiroir externe vers sa position avancée.

5. Raccord fluidique (R ; R') selon la revendication 4, **caractérisé en ce que** l'effort élastique du deuxième ressort (110) est supérieur à l'effort élastique du premier ressort (108).

6. Raccord fluidique (R ; R') selon l'une quelconque des revendications précédentes, **caractérisé en ce que** chaque organe de démultiplication (20 ; 20') est un levier qui, de la position intermédiaire à la position reculée du tiroir externe (102 ; 102'), pivote dans le corps principal (2 ; 2') autour d'un axe (XP ; XP') situé dans un plan orthogonal à l'axe central longitudinal (X2).

7. Raccord fluidique (R ; R') selon la revendication 6, **caractérisé en ce que**, selon une direction radiale à l'axe central longitudinal (X2), la surface de butée arrière (124 ; 124') du tiroir externe (102 ; 102') est disposée du même côté, par rapport à la surface de butée avant (63 ; 63') du corps principal (2 ; 2'), que la surface de butée avant (126 ; 126') du tiroir interne (104 ; 104').

8. Raccord fluidique (R ; R') selon la revendication 6 ou 7, **caractérisé en ce que** le levier (20 ; 20') comprend une tête externe (202 ; 202') et une tête interne (204 ; 204'), de préférence sphériques, disposées radialement de part et d'autre d'un corps intermédiaire (206 ; 206') de liaison, la tête externe étant engagée dans un logement interne (48 ; 48') du corps principal (2 ; 2') délimité longitudinalement par la surface de butée avant (63 ; 63') du corps principal et la tête interne étant engagée dans un logement (122 ; 122') du tiroir interne (104 ; 104') délimité longitudinalement par la surface de butée avant (126 ; 126') du tiroir interne, le corps intermédiaire étant apte à venir en contact contre la surface de butée arrière (124 ; 124') du tiroir externe.

9. Raccord fluidique (R ; R') selon la revendication 6, 7 ou 8, **caractérisé en ce que**, en configuration désaccouplée du raccord fluidique, le levier (20 ; 20') est incliné par rapport au plan orthogonal et la tête externe (202 ; 202') est en arrière de la tête interne (204 ; 204'), et **en ce que**, en configuration accouplée du raccord fluidique, le levier est incliné par rapport au plan orthogonal et la tête externe est en avant de la tête interne.

10. Raccord fluidique (R) selon l'une quelconque des revendications précédentes, **caractérisé en ce que** l'organe de démultiplication (20) est apte à venir en butée, dans une direction radiale à l'axe central longitudinal (X2), contre une surface de liaison (120) ménagée sur le tiroir externe (102) et, dans une direction radiale opposée, contre le corps principal (2).

11. Raccord fluidique (R) selon l'une quelconque des revendications précédentes, **caractérisé en ce que** l'organe de démultiplication (20) est monté, sans possibilité de mouvement longitudinal relatif, dans un logement (122) du tiroir interne (104) délimité longitudinalement par la surface de butée avant (126).

12. Raccord fluidique (R ; R') selon l'une quelconque des revendications précédentes, **caractérisé en ce que**, en configuration désaccouplée du raccord fluidique, une face (65) avant du poussoir (64), apte à venir en contact avec la soupape (304) de l'élément mâle (B) pour la repousser en position écartée, est décalée vers l'arrière par rapport à une face avant (128) du tiroir externe (102 ; 102') d'une distance égale à une distance longitudinale parcourue par le tiroir externe par rapport au corps principal (2 ; 2') de sa position avancée à sa position intermédiaire.

13. Raccord fluidique (R ; R') selon l'une quelconque des revendications précédentes, **caractérisé en ce qu'**un troisième joint (112) à lèvre(s) réalise l'étanchéité entre le tiroir interne (104 ; 104') et le tiroir externe (102 ; 102') en configuration de fermeture du tiroir (10 ; 10').

14. Raccord fluidique (R ; R') selon la revendication 13, **caractérisé en ce que** le premier joint (310) et le troisième joint (112) sont de géométrie identique.

15. Raccord fluidique (R ; R') fluidique selon l'une quelconque des revendications précédentes, **caractérisé en ce que** le corps complémentaire (30) est monté sur un support complémentaire (9) avec possibilité de débattement relatif perpendiculairement à un axe longitudinal (X30) défini par le corps complémentaire (30).

## Patentansprüche

1. Fluidkupplung (R; R'), umfassend ein Buchsenelement (A; A') und ein Steckerelement (B), das in das Buchsenelement eingesetzt werden kann, das Buchsenelement umfassend:
- einen Hauptkörper (2; 2'), der einen inneren Hauptkanal (24) definiert, der sich entlang einer längsgerichteten Mittelachse (X2) erstreckt, und einen feststehenden mittleren Stößel (64) umfasst; und
- einen Schieber (10; 10'), der in Längsrichtung in dem inneren Hauptkanal um den Stößel zwischen einer Schließkonfiguration und einer Öffnungskonfiguration des inneren Hauptkanals beweglich ist,
und das Steckerelement umfassend:
- einen komplementären Körper (30), der einen komplementären inneren Kanal (302) definiert; und
- ein Ventil (304), das in dem komplementären inneren Kanal zwischen einer Verschlussposition des komplementären inneren Kanals, in der eine erste Dichtung (310) die Abdichtung zwischen dem Ventil und dem komplementären Körper gewährleistet, und einer beabstandeten Position, in der das Ventil den komplementären inneren Kanal nicht mehr verschließt, beweglich ist,
wobei
- der Schieber (10; 10') in einer von der Fluidverbindung (R; R') entkoppelten Konfiguration in Schließkonfiguration ist und radial dicht mit dem Hauptkörper (2; 2') über eine zweite Dichtung (22; 22') zusammenwirkt, die in einer inneren Nut (46) des Hauptkörpers untergebracht ist, während das Ventil in Verschlussposition ist,
- das Ventil in einer gekoppelten Konfiguration der Fluidkupplung durch den Stößel (64) in eine beabstandete Position gedrückt wird, während der komplementäre Körper (30) mit dem Schieber zusammenwirkt, der in Öffnungskonfiguration ist,
**dadurch gekennzeichnet, dass** der Schieber (10; 10') einen äußeren Schieber (102; 102') und einen inneren Schieber (104; 104') umfasst, die in Bezug aufeinander beweglich sind, wobei der Schieber derart ist, dass:
- die zweite Dichtung (22; 22') in der Schließkonfiguration mit dem äußeren Schieber (102; 102') zusammenwirkt, der sich in einer vorgeschobenen Position befindet, und der innere Schieber (104; 104') in einer vorgeschobenen Position ist, in der der innere Schieber in dichtem Kontakt mit dem äußeren Schieber und mit dem Stößel ist; und
- der äußere Schieber in der Öffnungskonfiguration in einer zurückgestellten Position ist und der innere Schieber in einer gegenüber dem äußeren Schieber versetzten Position ist, sodass zwischen dem äußeren Schieber und dem inneren Schieber ein Durchgang für ein Fluid vorhanden ist,
dass eine erste Feder (108) zwischen dem inneren Schieber und dem Hauptkörper (2; 2') eingefügt ist, um den inneren Schieber in seine vorgeschobene Position zurückzuschieben, und dass das Buchsenelement (A; A') mindestens ein Untersetzungsorgan (20; 20') umfasst, wobei das oder jedes Untersetzungsorgan derart ist, dass während einer Kupplungsphase des Buchsenelements (A; A') und des Steckerelements (B), um die Fluidkupplung (R; R') von der entkuppelten Konfiguration in die gekuppelte Konfiguration zu überführen:
- der innere Schieber unabhängig von der Längsposition des äußeren Schiebers zwischen der vorgeschobenen Position und einer Zwischenposition, in der der komplementäre Körper (30) dicht mit der zweiten Dichtung (22; 22') zusammenwirkt, das Untersetzungsglied (20; 20') von mindestens einer von einer vorderen Anschlagfläche (63; 63'), die an dem Hauptkörper angebracht ist, einer hinteren Anschlagfläche (124; 124'), die an dem äußeren Schieber angebracht ist, und einer vorderen Anschlagfläche (126; 126'), die an dem inneren Schieber angebracht ist, außer Eingriff gebracht wird; wobei der innere Schieber in dichtem Kontakt mit dem äußeren Schieber und mit dem Stößel gehalten wird, und
- das Untersetzungsorgan von der Zwischenposition bis zur zurückgezogenen Position des äußeren Schiebers mit der vorderen Anschlagfläche des Hauptkörpers, mit der hinteren Anschlagfläche des äußeren Schiebers und mit der vorderen Anschlagfläche des inneren Schiebers in Eingriff ist, wobei jedes Untersetzungsorgan den inneren Schieber in seine in Bezug auf den äußeren Schieber versetzte Position bewegt.

2. Fluidkupplung (R; R') nach Anspruch 1, **dadurch gekennzeichnet, dass** von der Zwischenposition bis zu der zurückgestellten Position des äußeren Schiebers (102; 102'), die der äußere Schieber in gekoppelter Konfiguration der Fluidkupplung einnimmt:
- die innere Schieber (104; 104') in Bezug auf den äußeren Schieber nach hinten verschoben wird,
- ein Weg (c2; c2') einer Längsverschiebung des inneren Schiebers (104; 104') in Bezug auf den Hauptkörper (2; 2') mindestens 1,5 mal größer ist als ein Weg (c1; c1') einer Längsverschiebung des äußeren Schiebers (102; 102') in Bezug auf den Hauptkörper (2; 2').

3. Fluidkupplung (R) nach einem der vorherigen Ansprüche, **dadurch gekennzeichnet, dass** von der vorgeschobenen Position zu der Zwischenposition des äußeren Schiebers (104) jedes Untersetzungsorgan (20) aus der vorderen Anschlagfläche (63), die an dem Hauptkörper (2) angebracht ist, außer Eingriff gebracht wird und in dem Hauptkörper längsverschiebbar beweglich ist.

4. Fluidkupplung (R; R') nach einem der vorherigen Ansprüche, **dadurch gekennzeichnet, dass** eine zweite Feder (110) zwischen dem äußeren Schieber (102; 102') und dem Hauptkörper (2; 2') eingefügt ist, die den äußeren Schieber in seine vorgeschobene Position drückt.

5. Fluidkupplung (R; R') nach Anspruch 4, **dadurch gekennzeichnet, dass** die elastische Kraft der zweiten Feder (110) größer ist als die elastische Kraft der ersten Feder (108).

6. Fluidkupplung (R; R') nach einem der vorherigen Ansprüche, **dadurch gekennzeichnet, dass** jedes Übersetzungsorgan (20; 20') ein Hebel ist, der von der Zwischenstellung bis zu der zurückgezogenen Stellung des äußeren Schiebers (102; 102') in dem Hauptkörper (2; 2') um eine Achse (XP; XP') schwenkt, die sich in einer Ebene orthogonal zu der längsgerichteten Mittelachse (X2) befindet.

7. Fluidkupplung (R; R') nach Anspruch 6, **dadurch gekennzeichnet, dass** die hintere Anschlagfläche (124; 124') des äußeren Schiebers (102; 102') in einer Richtung radial zu der längsgerichteten Mittelachse (X2) in Bezug auf die vordere Anschlagfläche (63; 63') des Hauptkörpers (2; 2') auf der gleichen Seite angeordnet ist wie die vordere Anschlagfläche (126; 126') des inneren Schiebers (104; 104').

8. Fluidkupplung (R; R') nach Anspruch 6 oder 7, **dadurch gekennzeichnet, dass** der Hebel (20; 20') einen äußeren Kopf (202; 202') und einen inneren Kopf (204; 204') umfasst, die vorzugsweise kugelförmig sind und radial auf beiden Seiten eines verbindenden Zwischenkörpers (206; 206') angeordnet sind, wobei der äußere Kopf in eine innere Aufnahme (48; 48') des Hauptkörpers (2; 2'), die in Längsrichtung durch die vordere Anschlagfläche (63; 63') des Hauptkörpers begrenzt ist, eingreift, und der innere Kopf in eine Aufnahme (122; 122') des inneren Schiebers (104; 104'), die in Längsrichtung durch die vordere Anschlagfläche (126; 126') des inneren Schiebers begrenzt ist, eingreift, wobei der Zwischenkörper angepasst ist, um gegen die hintere Anschlagfläche (124; 124') des äußeren Schiebers in Kontakt zu kommen.

9. Fluidkupplung (R; R') nach Anspruch 6, 7 oder 8, **dadurch gekennzeichnet, dass** in der entkoppelten Konfiguration der Fluidkupplung der Hebel (20; 20') in Bezug auf die orthogonale Ebene geneigt ist und der äußere Kopf (202; 202') hinter dem inneren Kopf (204; 204') ist, und dass in der gekoppelten Konfiguration der Fluidkupplung der Hebel in Bezug auf die orthogonale Ebene geneigt ist und der äußere Kopf vor dem inneren Kopf ist.

10. Fluidkupplung (R) nach einem der vorherigen Ansprüche, **dadurch gekennzeichnet, dass** das Untersetzungsorgan (20) angepasst ist, um in einer Richtung radial zu de längsgerichteten Mittelachse (X2) gegen eine am äußeren Schieber (102) angebrachte Verbindungsfläche (120) und in einer entgegengesetzten radialen Richtung gegen den Hauptkörper (2) in Anlage zu kommen.

11. Fluidkupplung (R) nach einem der vorherigen Ansprüche, **dadurch gekennzeichnet, dass** das Untersetzungsorgan (20) ohne Möglichkeit einer relativen Längsbewegung in einer Aufnahme (122) des inneren Schiebers (104) montiert ist, die in Längsrichtung durch die vordere Anschlagfläche (126) begrenzt ist.

12. Fluidkupplung (R; R') nach einem der vorherigen Ansprüche, **dadurch gekennzeichnet, dass** eine Vorderseite (65) des Stößels (64), die angepasst ist, um mit dem Ventil (304) des Steckerelements (B) in Kontakt zu kommen, um es in eine beabstandete Position zu drücken, in der entkoppelten Konfiguration der Fluidkupplung in Bezug auf eine Vorderseite (128) des äußeren Schiebers (102; 102') um einen Abstand versetzt, der gleich wie ein Längsabstand ist, den der äußere Schieber in Bezug auf den Hauptkörper (2; 2') von seiner vorgeschobenen Position zu seiner Zwischenposition zurückgelegt hat.

13. Fluidkupplung (R; R') nach einem der vorherigen Ansprüche, **dadurch gekennzeichnet, dass** eine dritte Lippendichtung (112) in der Schließkonfiguration des Schiebers (10; 10') die Abdichtung zwischen dem inneren Schieber (104; 104') und dem äußeren Schieber (102; 102') bewirkt.

14. Fluidkupplung (R; R') nach Anspruch 13, **dadurch gekennzeichnet, dass** die erste Dichtung (310) und die dritte Dichtung (112) von einer identischen Geometrie sind.

15. Fluidkupplung (R; R') nach einem der vorherigen Ansprüche, **dadurch gekennzeichnet, dass** der komplementäre Körper (30) an einem komplementären Träger (9) mit Möglichkeit einer relativen Auslenkung senkrecht zu einer durch den komplementären Körper (30) definierten Längsachse (X30) montiert ist.

## Claims

1. A fluid coupling (R; R') comprising a female element (A; A') and a male element (B) able to be inserted into the female element, the female element comprising:
- a main body (2; 2') defining a main inner channel (24), which extends along a longitudinal central axis (X2), and comprising a fixed central plunger (64); and
- a slide valve (10; 10'), movable longitudinally in the main inner channel around the plunger between a closed configuration and an open configuration of the main inner channel,
and the male element comprising:
- a complementary body (30) defining a complementary inner channel (302); and
- a valve (304) movable in the complementary inner channel between a closed off position of the complementary inner channel, in which a first seal (310) ensures the tightness between the valve and the complementary body, and a separated position, in which the valve no longer closes off the complementary inner channel.
wherein
- in an uncoupled configuration of the fluid coupling (R; R'), the slide valve (10; 10') is in the closed configuration and cooperates radially tightly with the main body (2; 2') by means of a second seal (22; 22') housed in an inner groove (46) of the main body, while the valve is in the closed position,
- in a coupled configuration of the fluid coupling, the valve is pushed back in the separated position by the plunger (64) while the complementary body (30) cooperates with the slide valve, which is in the open configuration,
**characterized in that** the slide valve (10; 10') comprises an outer slide valve (102; 102') and an inner slide valve (104; 104'), which are movable relative to one another, the slide valve being such that:
- in the closed configuration, the second seal (22; 22') cooperates with the outer slide valve (102; 102'), which is in a forward position, and the inner slide valve (104; 104') is in a forward position in which the inner slide valve is in tight contact with the outer slide valve and with the plunger; and
- in the open configuration, the outer slide valve is in a withdrawn position and the inner slide valve is in an offset position relative to the outer slide valve, such that a passage for a fluid exists between the outer slide valve and the inner slide valve,
**in that** a first spring (108) is inserted between the inner slide valve and the main body (2; 2') in order to push the inner slide valve back toward its forward position, and **in that** the female element (A; A') comprises at least one gear reduction member (20; 20'), the or each gear reduction member being such that, during a coupling phase of the female (A; A') and male (B) elements to transition the fluid coupling (R; R') from the uncoupled configuration to the coupled configuration:
- irrespective of the longitudinal position of the outer slide valve between the forward position and an intermediate position, in which the complementary body (30) cooperates tightly with the second seal (22; 22'), the gear reduction member (20; 20') is disengaged from at least one among a front stop surface (63; 63') arranged on the main body, a rear stop surface (124; 124') arranged on the outer slide valve and a front stop surface (126; 126') arranged on the inner slide valve, the inner slide valve being kept in tight contact with the outer slide valve and with the plunger, and
- from the intermediate position to the withdrawn position of the outer slide valve, the gear reduction member is engaged with the front stop surface of the main body, with the rear stop surface of the outer slide valve and with the front stop surface of the inner slide valve, each gear reduction member moving the inner slide valve toward its offset position relative to the outer slide valve.

2. The fluid coupling (R; R') according to claim 1, **characterized in that**, from the intermediate position to the withdrawn position of the outer slide valve (102; 102'), which the outer slide valve adopts in the coupled configuration of the fluid coupling:
- the inner slide valve (104; 104') is moved toward the rear relative to the outer slide valve,
- a longitudinal travel (c2; c2') of the inner slide valve (104; 104') relative to the main body (2; 2') is at least 1.5 times greater than a longitudinal travel (c1; c1') of the outer slide valve (102; 102') relative to the main body (2; 2').

3. The fluid coupling (R) according to any one of the preceding claims, **characterized in that**, from the forward position to the intermediate position of the outer slide valve (104), each gear reduction member (20) is disengaged from the front stop surface (63) arranged on the main body (2) and is translatable longitudinally in the main body.

4. The fluid coupling (R; R') according to any one of the preceding claims, **characterized in that** a second spring (110) is inserted between the outer slide valve (102; 102') and the main body (2; 2'), pushing the outer slide valve back toward its forward position.

5. The fluid coupling (R; R') according to claim 4, **characterized in that** the resilient force of the second spring (110) is greater than the resilient force of the first spring (108).

6. The fluid coupling (R; R') according to any one of the preceding claims, **characterized in that** each gear reduction member (20; 20') is a lever that, from the intermediate position to the withdrawn position of the outer slide valve (102; 102'), pivots in the main body (2; 2') about an axis (XP; XP') located in a plane orthogonal to the longitudinal central axis (X2).

7. The fluid coupling (R; R') according to claim 6, **characterized in that**, along a direction radial to the longitudinal central axis (X2), the rear stop surface (124; 124') of the outer slide valve (102; 102') is arranged on the same side, relative to the front stop surface (63; 63') of the main body (2; 2'), as the front stop surface (126; 126') of the inner slide valve (104; 104').

8. The fluid coupling (R; R') according to claim 6 or 7, **characterized in that** the lever (20; 20') comprises an outer head (202; 202') and an inner head (204; 204'), which are preferably spherical, arranged radially on either side of an intermediate connecting body (206; 206'), the outer head being engaged in an inner housing (48; 48') of the main body (2; 2') delimited longitudinally by the front stop surface (63; 63') of the main body and the inner head being engaged in a housing (122; 122') of the inner slide valve (104; 104') delimited longitudinally by the front stop surface (126; 126') of the inner slide valve, the intermediate body being able to come into contact against the rear stop surface (124; 124') of the outer slide valve.

9. The fluid coupling (R; R') according to claim 6, 7 or 8, **characterized in that**, in the uncoupled configuration of the fluid coupling, the lever (20; 20') is inclined relative to the orthogonal plane and the outer head (202; 202') is behind the inner head (204; 204'), and **in that**, in the coupled configuration of the fluid coupling, the lever is inclined relative to the orthogonal plane and the outer head is in front of the inner head.

10. The fluid coupling (R) according to any one of the preceding claims, **characterized in that** the gear reduction member (20) is able to abut, in a direction radial to the longitudinal central axis (X2), against a connecting surface (120) arranged on the outer slide valve (102) and, in an opposite radial direction, against the main body (2).

11. The fluid coupling (R) according to any one of the preceding claims, **characterized in that** the gear reduction member (20) is mounted, without possibility of relative longitudinal movement, in a housing (122) of the inner slide valve (104) delimited longitudinally by the front stop surface (126).

12. The fluid coupling (R; R') according to any one of the preceding claims, **characterized in that**, in the uncoupled configuration of the fluid coupling, a front face (65) of the plunger (64), able to come into contact with the valve (304) of the male element (B) in order to push it back into the separated position, is offset toward the rear relative to a front face (128) of the outer slide valve (102; 102') by a distance equal to a longitudinal distance traveled by the outer slide valve relative to the main body (2; 2') from its forward position to its intermediate position.

13. The fluid coupling (R; R') according to any one of the preceding claims, **characterized in that** a third lip seal (112) provides the tightness between the inner slide valve (104; 104') and the outer slide valve (102; 102') in the closed configuration of the slide valve (10; 10').

14. The fluid coupling (R; R') according to claim 13, **characterized in that** the first seal (310) and the third seal (112) have an identical geometry.

15. The fluid coupling (R; R') according to any one of the preceding claims, **characterized in that** the complementary body (30) is mounted on a complementary support (9) with the possibility of relative clearance perpendicular to a longitudinal axis (X30) defined by the complementary body (30).
